# EUROPEAN PATENT APPLICATION

(11) **EP 3 699 469 A1**
(43) Date of publication of application: **26.08.2020**
(21) Application number: 19211298.5
(22) Date of filing: 25.11.2019
(51) Int. Cl.: F16L 9/18, B23K 26/342

(54) **SYSTEM OF CONCENTRIC FLUID CONDUITS AND CORRESPONDING MANUFACTURING TECHNIQUE**

(30) Priority: 20.02.2019 US 201916280992
(71) Applicant: Delavan, Inc., West Des Moines, IA 50265 (US)
(72) Inventor: PFEFFER, Brett A., Granger, IA 50109 (US); BORROR, Dustin Andrew, Norwalk, IA 50211 (US); VIERHOUT, Robert W., Cumming, IA 50061 (US)
(74) Representative: Dehns

(57) **Abstract**

A system of co-centric conduits for transporting fuel, liquid, or gas including a first conduit (104) elongated along a longitudinal axis defining an inner diameter, an outer diameter defined by an outer surface, a second conduit (102) surrounding the first conduit elongated along the longitudinal axis defining an inner diameter defined by an inner surface and an outer diameter defined by an outer surface, a clearance between the first outer diameter and the second inner diameter, and a separating member (116) mounted to the outer surface of the first member configured for maintaining the clearance between the outer diameter of the first conduit (104) and the inner diameter of the second conduit (102).

## Description

### Background

### Technological Field

The present disclosure relates to a system of conduits for transporting fuel, liquid or gas, and more particularly to a system of concentric conduits.

### Description of Related Art

A variety of devices and methods are known for transporting fuel in concentric conduits. Wire wrapping is typically used to maintain concentricity of nested tubes during bending operations. Wire wrapping can be used to limit contact between tubes to decrease thermal conduction between the outer and the inner tube, and limit relative displacement between the tubes, and to maintain the form of the outer tube by providing an inner "backing" for tight bends.

The conventional methods and systems have generally been considered satisfactory for their intended purpose. However, there is still a need in the art for devices and methods having improved manufacturing and stand-off control. There also remains a need in the art for such components that are economically viable. The present disclosure may provide a solution for at least one of these remaining challenges.

### Summary of the Invention

A system of concentric conduits for transporting fuel, liquid, or gas includes a first conduit elongated along a longitudinal axis defining an inner diameter defined by an inner surface, an outer diameter defined by an outer surface, a second conduit surrounding the first conduit elongated along the longitudinal axis defining an inner diameter defined by an inner surface and an outer diameter defined by an outer surface, a clearance between the first outer diameter and the second inner diameter, and a separating member mounted to the outer surface of the first member for maintaining the clearance between the outer diameter of the first conduit and the inner diameter of the second conduit. The separating member can be raised from the outer surface of the first conduit.

The at least one separating member can include a multiple of longitudinally elongated strips circumferentially spaced about the outer diameter of the first conduit, multiple stubs arranged in a helical pattern on the outer surface of the first conduit, a row of discrete stubs arranged in a circular pattern, and a second separating member protruding from the inner surface of the second conduit configured to control maximum insertion of the first conduit into the second conduit.

The first and second conduit can include a straight portion free of a separating member and a curved portion including the separating member helically wrapping around the outer diameter of the first conduit.

The outer surface of the first conduit can include at least one straight uninterrupted path from a first end of the first conduit to a second end of the first conduit.

A method of forming a system of concentric conduits for transporting fuel includes laser-cladding at least one separating member on an outer surface of a first conduit, positioning a second conduit around at least a portion of the first conduit, such that a clearance between the first conduit and second conduit is maintained by the at least one separating member.

The method can include bending the first conduit and the second conduit at least one location and maintaining the clearance between an outer diameter of the first conduit and an inner diameter of a second conduit such that it remains unchanged.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a perspective view of a system of concentric conduits showing a first conduit and a second conduit;
Fig. 2 is a perspective view of a system of concentric conduits showing a second embodiment of first conduit and a second conduit;
Fig. 2A is a cross sectional view of the system of Fig. 2, showing the diameters of the system.
Fig. 3 is a perspective view of the first conduit of Fig. 1, showing a type of separating member;
Fig. 4 is a perspective view of the first conduit of Fig. 1, showing another type of separating member; and
Fig. 4A is an enlarged view of the system of Fig. 4, showing the circled section.

### Detailed Description

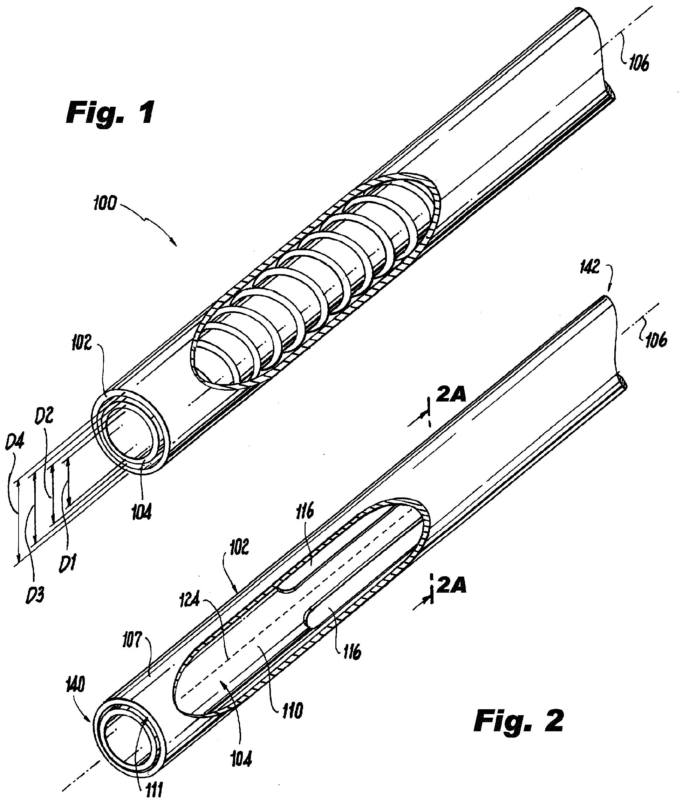

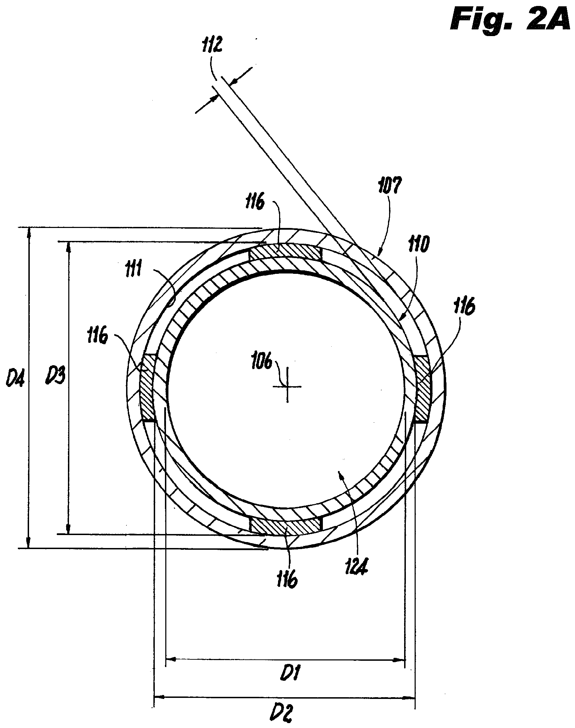

Reference will now be made to the drawings wherein like reference numerals identify similar structural features or aspects of the subject invention. For purposes of explanation and illustration, and not limitation, a partial view of an exemplary embodiment of a system of concentric conduits for transporting fuel in accordance with the invention is shown in Fig. 1 and is designated generally by reference character 100. Other embodiments of the system in accordance with the invention, or aspects thereof, are provided in Figs. 2-4A, as will be described. The methods and systems of the invention can be used to improve concentricity during bending operations and to decrease manufacturing times.

Referring now to Figs. 1-2A, a system 100 of concentric conduits for transporting fuel, liquid, or gas in accordance with the present disclosure is shown including a first conduit 104 elongated along a longitudinal axis 106 defining an inner diameter D1, an outer diameter D2 defined by an outer surface 110, a second conduit 102 surrounding the first conduit 104 elongated along the longitudinal axis 106 defining an inner diameter D3 defined by an inner surface 111 and an outer diameter D4 defined by an outer surface 107, a clearance 112 between the first outer diameter D2 and the second inner diameter D3 , and a separating member 116 mounted to the outer surface 110 of the first conduit 104 configured for maintaining the clearance 112 between the outer diameter D2 of the first conduit 104 and the inner diameter D3 of the second conduit 102. The fuel or any other suitable fluid or gas can flow inside the first conduit 104 and within the clearance 112. The separating member 116 can be raised from the outer surface 110 of the first conduit 104. The presence of the clearance 112 ensures the two conduits 102, 104 do not contact each other, and a gap is maintained, thus improving heat shielding. The separating member 116 can also be used to create flow-channels in order to increase the flow rate of the fluid at desired locations. It is also considered that the separating body can be arranged in a now linear arrangement instead of being helical.

Referring to Fig. 2, the at least one separating member 116 can include a multiple of longitudinally elongated strips 116 circumferentially spaced about the outer diameter D2 of the first conduit 104. The outer surface of the first conduit 104 can include at least one straight uninterrupted path 124 from a first end 140 of the first conduit 104 to a second end 142 of the first conduit 104. It can be beneficial to increase and decrease the flow rate to better control the heat transfer between the fluids flowing through each of the conduits.

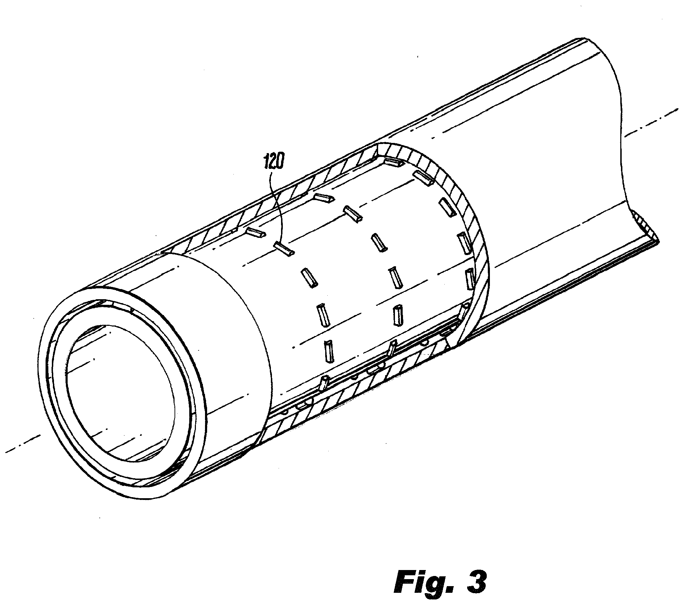

Referring to Fig. 3, it is also conceived that the separating member 116 can include multiple stubs 120 arranged in a helical pattern on the outer surface 110 of the first conduit 104. It is also considered that the stubs 120 could be used in any acceptable pattern, including helical, straight/linear, or in targeted/local circular rings. This feature 120 helps decrease the weight of the separating member and also introduce less heat into the conduit 104 during manufacture, thereby reducing the potential for deformation or any other negative effect of heat on base material's mechanical properties.

Discrete stubs arranged in a circular pattern and a second separating member protruding from the inner surface of the second conduit can be configured to control maximum insertion of the first conduit into the second conduit. This feature can be useful in mistake proofing during manufacture. It is also considered that the first separating member and the second separating member can be complementary to each other or mate each other, helping reduce relative twisting of the conduits. The separating member can include inscribed indicia of a positioning or installation instruction, this feature can be useful in mistake proofing assemblies. Indicia of a source indicating mark can also be inscribed in order to protect identification and reduce counterfeiting.

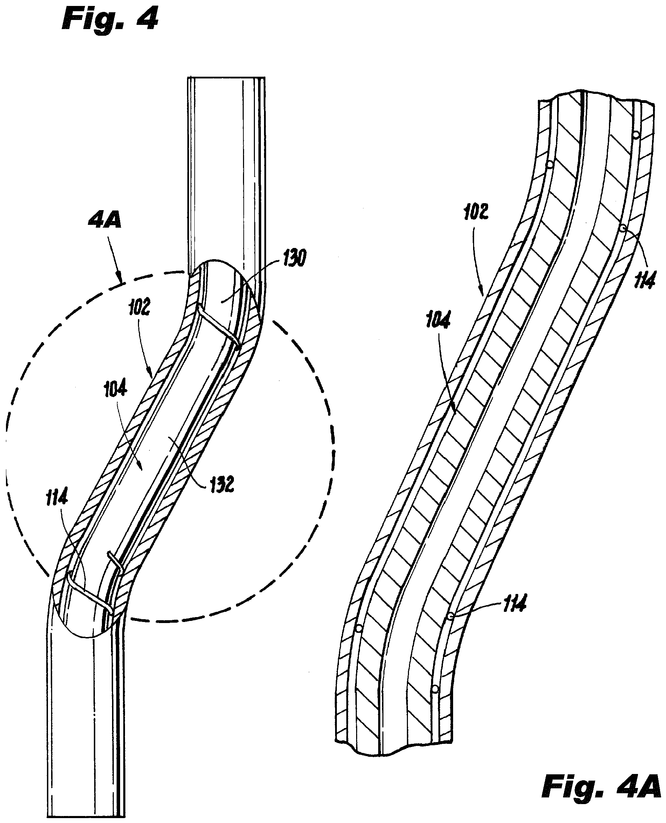

Referring to Figs. 4 and 4A, it is also contemplated that the first conduit 104 and second conduit 102 include a straight portion 132 free of a separating member and a curved portion 130 including the separating member 114 helically wrapping around the outer diameter D2 of the first conduit 104. This feature can be employed where concentricity or increased rigidity is required.

Further, a method of forming a system of concentric conduits for transporting fuel includes laser-cladding at least one separating member 116 on an outer surface 110 of a first conduit 104, positioning a second conduit 102 around at least a portion of the first conduit 104, such that a clearance 112 between the first conduit 104 and second conduit 102 is maintained by the at least one separating member 116. The method can include bending the first conduit 104 and the second conduit 102 at least one location 130 and such that the clearance 112 between an outer diameter D2 of the first conduit 104 and an inner diameter D3 of a second conduit 102 is maintained or at least partially maintained. The at least one separating member 116 can include a material different than the first conduit 104 and different than the second conduit 102 and can include an alloy metal. X-rays could be used for identification of the source of the parts.

The methods and systems of the present disclosure, as described above and shown in the drawings, provide for fuel, gas, or liquid transportation system with superior properties including increased reliability and stability, and reduced size, weight, complexity, and/or cost. While the apparatus and methods of the subject disclosure have been shown and described with reference to embodiments, those skilled in the art will readily appreciate that changes and/or modifications may be made thereto without departing from the spirit and score of the subject disclosure.

## Claims

1. A system (100) of co-centric conduits for transporting fuel, liquid, or gas comprising:
a first conduit (104) elongated along a longitudinal axis defining an inner diameter, an outer diameter defined by an outer surface (110);
a second conduit (102) surrounding the first conduit (104) elongated along the longitudinal axis defining an inner diameter defined by an inner surface and an outer diameter defined by an outer surface;
a clearance (112) between the first outer diameter and the second inner diameter; and
a separating member (116) mounted to the outer surface of the first member configured for maintaining the clearance between the outer diameter of the first conduit (104) and the inner diameter of the second conduit (102).

2. The system of claim 1, wherein the separating member (116) is raised from the outer surface of the first conduit.

3. The system of claim 1 or 2, wherein the at least one separating member (116) includes a multiple of longitudinally elongated strips circumferentially spaced about the outer diameter of the first conduit.

4. The system of any preceding claim, wherein the outer surface of the first conduit (104) includes at least one straight uninterrupted path from a first end of the first conduit (104) to a second end of the first conduit (104).

5. The system of any of claims 1, 2 or 4, wherein the at least one separating member (116) includes multiple stubs (120) arranged in a helical pattern on the outer surface of the first conduit (104).

6. The system of any preceding claim, wherein the first conduit (104) includes a straight portion free of a separating member and a curved portion including the separating member helically wrapping around the outer diameter of the first conduit (104).

7. A method of forming a system of concentric conduits for transporting fuel comprising:
laser-cladding at least one separating member (116) on an outer surface of a first conduit (104);
positioning a second conduit (102) around at least a portion of the first conduit (104),
such that a clearance between the first conduit (104) and the second conduit (102) is maintained by the at least one separating member (116).

8. The method of claim 7, further comprising bending the first conduit (104) and the second conduit (102) at least one location and the clearance between an outer diameter of the first conduit and an inner diameter of a second conduit (102) is maintained.

9. The method of claim 7 or 8, further comprising bending the first conduit (104) and the second conduit (102) at least one location and the clearance between an outer diameter of the first conduit and an inner diameter of a second conduit (102) is partially maintained

10. The system of any of claims 7 to 9, wherein the at least one separating member (116) includes an alloy metal.
